(19) Europäisches Patentamt
European Patent Office
Office européen des brevets

(11) EP 2 604 636 A1

# (12) EUROPEAN PATENT APPLICATION

(43) Date of publication:
**19.06.2013 Bulletin 2013/25**

(21) Application number: **11193901.3**

(22) Date of filing: **15.12.2011**

(51) Int Cl.:
***C08F 220/56*** *(2006.01)*
***C09K 8/588*** *(2006.01)*
***C08F 293/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Stichting Dutch Polymer Institute**
**5612 AB Eindhoven (NL)**

(72) Inventor: **The designation of the inventor has not yet been filed**

(74) Representative: **Renkema, Jaap**
**IPecunia Patents B.V.**
**P.O. Box 593**
**6160 AN Geleen (NL)**

## (54) Enhanced oil recovery using polyacrylamides

(57) The invention relates to a polymer comprising a central structure to which n branches are covalently attached, wherein n is an integer from 1 to 50, wherein the branches comprise polyacrylamide moieties, wherein the theoretical number average molecular weight of the polymer is at least 1 00,000g/mol. This polymer is especially suitable for use in enhanced oil recovery.

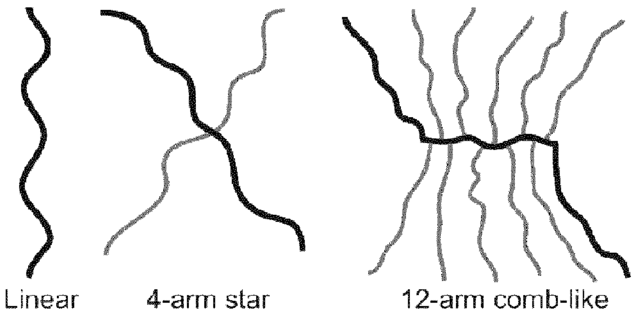


Fig. 5

EP 2 604 636 A1

## Description

The invention relates to a polyacrylamide polymer, as aqueous composition comprising said polymer, a process for the preparation of said polymer and to the use of said polymer in enhanced oil recovery and other applications.

After the primary supply of oil in a well has been exhausted, it is common practice to recover the oil from the cracks and interstices in the underground rock formations. One technique is to flood the oil well with water to displace the oil, the so-called water flooding. However, after water flooding, residual oil still remains, for example as 1) oil film on a rock surface; as 2) oil in "dead ends"; as 3) oil in pores throats retained by capillary forces or as 4) oil un-swept in micro scale heterogeneous portions of the core (from D. Wang et al., SPE-63227 (2000), 1-10).

The yield of the recovery of the oil can be improved by the injection of (aqueous solutions of) various chemicals, into the well. For example, a water-soluble polymer may be used. This technique is also often referred to as 'polymer flooding'.

To date, only two water soluble polymers have been successfully (commercially) implemented: partially hydrolyzed polyacrylamide (HPAM) and xanthan gum. Several other polymers have been identified as possible candidates for polymer flooding (from D.A.Z. Wever et al., Prog. Polym. Sci. 36 (2011), 1558-1628). Wang, D. et al. describe in 'Viscous-elastic polymer can increase microscale displacement efficiency in cores' in Society of Petroleum Engineers Inc., SPE 63227 (2000), 1-10, that flooding with fluids that have elasticity as well as viscosity (viscoelastic polymers), all four types of residual oil as mentioned above can be reduced. However, in view of the decreasing amounts of oil reserves, the consequent higher oil prices and the environmental strain that oil production lays on our planet, there is a continuous need to increase the amount of oil that can be obtained from an oil well. At the same time, for environmental (toxicity) reasons, for reasons of purity of the oil product and for economic reasons of a low production price, it is desired to keep the amount of chemicals needed for polymer flooding as low as possible.

Therefore, it is the object of the invention to provide a chemical that may be used for enhanced oil recovery, but which does not need to be used in high amounts.

This object is achieved by a polymer comprising a central structure to which n branches are covalently attached, wherein n is an integer from 1 to 50, wherein the branches comprise polyacrylamide moieties, wherein the theoretical number average total molecular weight of the polymer is at least 100,000g/mol.

It has been found that the polymers of the invention show a viscoelastic behavior in aqueous solution that is similar to or even higher as compared to linear polyacrylamides of the same average number molecular weight. Therefore, lower amounts of polymers of the invention than of linear polyacrylamides may be needed for similar viscoelastic properties of an aqueous solution thereof. Enhanced oil recovery may thus be performed with the same efficiency with a lower amount of polymer or with a higher efficiency with the same amount of polymer.

Furthermore, the polymers of the invention may have one or more of the following advantageous properties:

- The polymers of the invention may have a higher viscosity at lower shear rates and a low viscosity at higher shear rates, which makes these polyacrylamides especially suitable for use in enhanced oil recovery. This is especially favorable in case of low rock permeability, i.e. in cases where the rock has permeabilities in the range of 1 to 50m Da.
- The polymers of the invention may be less susceptible to degradation under saline conditions, for instance if salt is present in a concentration of more than 20,000ppm or even in brine.
- The polymers of the invention may have a prolonged stable solution viscosity.
- The polymers of the invention may be used at temperatures of 80 to 120 °C.
- The polymers of the invention may be used to recover oils having a viscosity of 1 to 200cP.

US4,795,784 discloses a beta-alanine type branched partially hydrolyzed polyacrylamide that enhanced the viscosity of an aqueous injection fluid and use thereof as viscosity enhancing agents.

US4,400,496 discloses graft copolymers having starch as the central chain with grafted side chains of acrylamide or acrylamide-acrylic acid and its use in preparing highly viscous aqueous solutions that are useful in oil recovery from subterranean wells.

The polymer of the invention has a theoretical number average total molecular weight of at least 100,000 g/mol, for example of at least 500,000, for example of at least 1,500,000g/mol and/or for example of at most 20,000,000, for example of at most 10,000,000g/mol. For purpose of the invention, the theoretical number average total molecular weight is determined as described in the experimental section.

With central structure is meant the part of the polymer to which all branches in the polymer are attached.

The polymer may for example have a comb, a star structure or a bottlebrush or other structure.

The polymers of the invention may be prepared using ATRP. The central structure may be the reaction product of a macroinitiator and acrylamide.

Within the framework of the invention, the macroinitiator is a molecule with one or more transferable atoms or groups. The macroinitiator may for example be a small molecular, macromolecule or even a functionalized heterogeneous

surface. The transferable atoms or groups are most often (pseudo) halides that can undergo a one electron redox reaction with a transition metal catalyst (combination of catalyst and ligand as described herein) that is added to the reaction medium in a lower oxidation state forming the reactive species and the catalyst complex in the higher oxidation state capable of deactivating the propagating radical.

When using ATRP, the macroinitiator will be incorporated in its entirety into the final polymer and will therefore become an integral part of the polymer.

The macroinitiator may be a monofunctional initiator (macroinitiator having one functional group) or may be a multifunctional initiator (macroinitiator having at least 2 functional groups that are capable of providing a site for acrylamide chain growth) with acrylamide monomer.

Examples of macroinitiators include but are not limited to multifunctional initiators comprising 2 or more initiating sites (functional groups that are capable of providing a site for acrylamide chain growth), for example multifunctional initiators comprising 10 or more initiating sites, for example multifunctional initiators comprising at most 50 initiating sites. Commercially available multifunctional initiators such as pentaerythritol tetrakis(2-bromoisobutyrate) ($C\text{-}Br_4$) may be used to form the polymer of the invention, but also macroinitiators such as (co)polymers with controlled topology may be used. The macroinitiators may be used as such or may be attached to a surface, such as for example a particle, flat surface, a fiber or a porous material.

In a preferred embodiment of the invention, the multifunctional initiator is a functionalized polyketone as described in US5,952,459, hereby incorporated by reference. The polyketone is preferably a polyketone synthesized from ethylene and/or propylene and carbon monoxide. The polyketone may be prepared using methods known in the art, for example by using a Pd(II) catalyst. The amounts of ethylene, propylene and carbon monoxide used in the preparation of the polyketone are in principle not critical and are for example in the range from 0 to 50mol% ethylene, in the range from 0 to 50mol% propylene and in the range from 1 to 50mol% carbon monoxide based on total amount of ethylene, propylene and carbon monoxide (the mol ratio between the total olefin content and the carbon monoxide is 1:1). The polyketone preferably has an average molecular weight as determined using GPC as described in the experimental section in the range from 500 up to and including 8000g/mol. For example the average molecular weight is at least 500, for example at least 1000 and/or for example at most 6500 g/mol, for example at most 7000, for example at most 8000g/mol.

The polyketone may be functionalized through a classic Paal-Knorr reaction as known to the skilled person, for example as described in US5,952,459, hereby incorporated by reference. For example, functionalization may be performed by reacting the polyketone with a halogen substituted alkylamine, for example 3-bromopropan-1-amine or 3-chloropropan-1-amine in the Paal-Knorr reaction.

Each of the branches in the polymer preferably comprise at least 3 monomer units, that is the branches are preferably prepared from at least 3 monomers each, preferably at least 3 acrylamide monomers each. For example, each of the branches in the polymer may comprise at least 10 monomer units, for example at least 20 monomer units and/or at most 300000, for example at most 25000, for example at most 6000 monomer units each.

The number of branches may be determined as described in the experimental section and is 1 to 50 branches per polymer(chain) of the invention. For example, n may stand for an integer of at least 2, for example of at least 3, for example of at least 4, for example of at least 6, for example of at least 10 and/or for an integer of at most 50, for example of at most 40, for example of at most 30, for example of at most 25.

The theoretical number average total molecular weight divided by the number of branches gives an indication of the degree of branching of the polymer is. Preferably, in the polymers of the invention, the theoretical number average molecular weight divided by the number of branches is in the range from 10,000 to 7,000,000 g/mol.

With polyacrylamide moiety is meant a structure prepared by reacting at least 3 acrylamide monomers. Preferably, the polyacrylamide moiety is prepared by reacting at least 4, for example at least 5, for example at least 10, for example at least 100, for example at least 1,000, for example at least 10,000, for example at least 100,000 and/or for example of at most 300,000, for example of at most 200,000, for example of at most 150,000 acrylamide monomers.

Acrylamide is sometimes also referred to as prop-2-enamide and is commercially available.

The $NH_2$ sidegroups of the polyacrylamide moieties may be hydrolyzed to hydroxyl groups. The degree of hydrolyzation as used herein is the total number of hydroxyl groups in the polymer of the invention divided by the total number of amine groups in the polymer of the invention. The polymer of the invention may be (partially) hydrolyzed, that is the side-groups of the polymer of the invention may be hydrolyzed, which may increase the viscosity of the polymer of the invention in solution. The degree of hydrolyzation of the polymer of the invention is preferably from 0 up to and including 50%. Therefore, the invention also relates to a polymer of the invention, wherein the degree of hydrolyzation of the polymer is at most 50%, preferably at most 25%, most preferably at most 5%.

Polymers of the invention having lower degrees of hydrolyzation, for example of at most 5% or of at most 1% or having a 0% degree of hydrolyzation are preferred for use in saline conditions, as these polymers are more stable in saline solutions.

The branches in the polymer of the invention may further comprise hydrophobic moieties. With hydrophobic

moiety is meant a structure prepared by reacting at least 3 hydrophobic monomers. When used in an aqueous solution, the polymer comprising hydrophobic moieties shows an increase in viscosity at higher temperatures, whereas the viscosity of polymers of the invention not comprising hydrophobic moieties decreases with increasing temperature. These are properties that are advantageous for enhanced oil recovery.

The hydrophobic moiety may for example be the reaction product of at least 4, for example of at least 5, for example of at least 10 hydrophobic monomers, for example of at least 100, for example of at least 1,000, for example of at least 10,000 and/or for example of at most 100,000, for example of at most 90,000, for example of at most 80,000, for example of at most 50,000, for example of at most 25,000 hydrophobic monomers.

Examples of hydrophobic monomers that can be used to prepare the hydrophobic moieties in the polymer of the invention include but are not limited to monomers chosen from the group of *N*-alkyl substituted acrylamides, for example *N*-isopropylacrylamide, *N*-2-hydroxyisopropylacrylamide, *N*,*N*-dimethylacrylamide, *N*-ethylacrylamide, *N,N*-ethylmethylacrylamide, *N*-*n*-propylacrylamide, *N*-*tert*-butylacrylamide, *N*-*n*-butylacrylamide, *N*,*N*-bis(2-methoxyethyl) acrylamide, *N*-3-methoxypropylacrylamide or ethoxypropylacrylamide; alkyl-substituted celluloses, for example methylcellulose or ethyl(hydroxyethyl)cellulose or hydroxypropylcellulose; and other monomers, such as (2-dimethylamino) ethyl methacrylate, vinyl methylether, *N*-vinylcaprolactam, propylene oxide, 2-dimethylaminoe ethyl methacrylate, 2-methyl-2-oxazoline, 2-isopropyl-2-oxazoline and mixtures thereof.

In another aspect therefore, the invention relates to hydrophobic moieties that are formed by polymerization of hydrophobic monomers containing double bonds chosen from the group of *N*-alkyl substituted acrylamides, for example *N*-isopropylacrylamide, *N*-2-hydroxyisopropylacrylamide, *N*,*N*-dimethylacrylamide, *N*-ethylacrylamide, *N*,*N*-ethylmethylacrylamide, *N*-*n*-propylacrylamide, *N*-*tert*-butylacrylamide, N-n-butylacrylamide, *N*,*N*-bis(2-methoxyethyl)acrylamide, *N*-3-methoxypropylacrylamide or ethoxypropylacrylamide; alkyl-substituted celluloses, for example methylcellulose or ethyl (hydroxyethyl)cellulose or hydroxypropylcellulose; and other monomers, such as (2-dimethylamino)ethyl methacrylate, vinyl methylether, *N*-vinylcaprolactam, propylene oxide, 2-dimethylaminoe ethyl methacrylate, 2-methyl-2-oxazoline, 2-isopropyl-2-oxazoline and mixtures thereof.

For example, the hydrophobic moiety may be formed by polymerization of the monomer *N*-isopropylacrylamide (NIPAM) .

Preferably, the polydispersity index (PDI) of the polymer of the invention is at most 2.5, for example at most 2.0. For purpose of the invention, the polydispersity index is determined using gel permeation chromatography (GPC) as described in the experimental section.

In a special embodiment, the invention relates to a polymer of the invention, wherein the polymer is a random copolymer represented by formula (1)

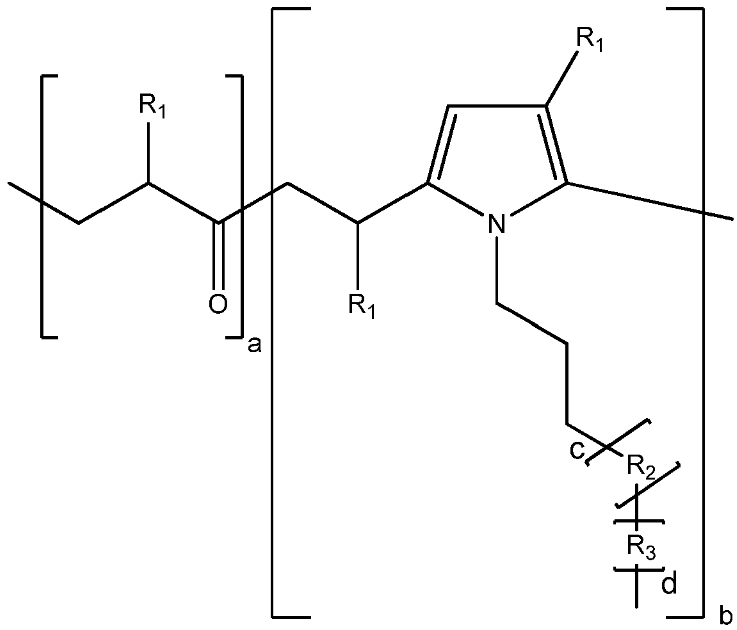

(1)

wherein $R^1$ stands for H or methyl,
wherein $R^2$ stands for a polyacrylamide moiety according to formula (2)

$R_2$ = 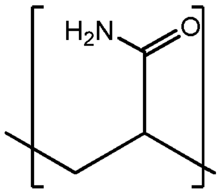

(2)

wherein $R^3$ stands for a hydrophobic moiety,
wherein a stands for an integer in the range from 1 up to and including 450,
wherein b stands for an integer in the range from 1 up to and including 50,
wherein c stands for an integer in the range from 3 up to and including 300,000 and wherein d stands for an integer in the range from 0 to 100,000

In the context of the invention with 'random copolymer' is meant a copolymer of two or more polymer chain repeating units. In the case of the random copolymer of formula (1), there are two polymer chain repeating units: the polyketone unit and the functionalization unit to which the polyacrylamide moiety $(R_2)_c$ and optionally the hydrophobic moiety $(R^3)_d$ is attached. The polyacrylamide moiety together with the optional hydrophobic moeity form(s) the branch (es) of the polymer of the invention.

In formula (1), a preferably stands for an integer of at least 3, for example at least 4, for example at least 6, for example at least 10 and/or for an integer of at most 450, for example at most 400, for example at most 300, for example at most 250.

In formula (1), b preferably stands for an integer of at least 2, for example of at least 3, for example of at least 4, for example of at least 6, for example of at least 10 and/or for an integer of at most 50, for example of at most 40, for example of at most 30, for example of at most 25.

In formula (1), c preferably stands for an integer of at least 4, for example at least 5, for example at least 10, for example at least 100, for example at least 1,000, for example at least 10,000, for example at least 100,000 and/or for example of at most 300,000, for example of at most 200,000, for example of at most 150,000.

In formula (1), d may stand for 0 (in which case there is no hydrophobic moiety in the polymer of the invention), or d may stand for an integer of at least 1, for example of at least 2, for example of at least 3, for example of at least 4, for example of at least 5, for example of at least 10, for example of at least 100, for example of at least 1,000, for example of at least 10,000 and/or for example of at most 100,000, for example of at most 90,000, for example of at most 80,000, for example of at most 50,000, for example of at most 25,000.

The hydrophobic moiety is prepared by polymerization of hydrophobic monomers. Examples of hydrophobic monomer include but are not limited to monomers chosen from the group of *N*-alkyl substituted acrylamides, for example *N*-isopropylacrylamide, *N*-2-hydroxyisopropylacrylamide, *N*,*N*-dimethylacrylamide, *N*-ethylacrylamide, *N*,*N*-ethylmethylacrylamide, *N*-*n*-propylacrylamide, *N*-*tert*-butylacrylamide, *N*-*n*-butylacrylamide, *N*,*N*-bis(2-methoxyethyl)acrylamide, *N*-3-methoxypropylacrylamide or ethoxypropylacrylamide; alkyl-substituted celluloses, for example methylcellulose or ethyl (hydroxyethyl)cellulose or hydroxypropylcellulose; and other monomers, such as (2-dimethylamino)ethyl methacrylate, vinyl methylether, *N*-vinylcaprolactam, propylene oxide, 2-dimethylaminoe ethyl methacrylate, 2-methyl-2-oxazoline, 2-isopropyl-2-oxazoline and mixtures thereof.

For example, in case $R^3$ is the hydrophobic moiety is prepared by polymerization of N-isopropylacrylamide monomers, $R^3$ is represented by formula (3)

$R_3$ = 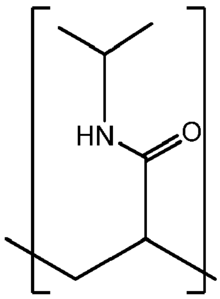

(3).

The hydrophobic moiety may form a block copolymer with the polyacrylamide.

It has been found that the incorporation of hydrophobic monomers in the polymers of the invention leads to an increase in the solution viscosity at higher temperatures, which makes these polymers very suitable for use in enhanced oil recovery at temperatures of 80 to 120°C.

Preferably, the viscosity of a solution containing the polymer of the invention is in the range of 1 - 200 mPa.s at polymer concentrations lower than 0.5 wt.% at a temperature of 50°C.

Preferably the storage modulus G' as measured as described in the experimental section herein is in the range from 0.1 to 10 Pa at a frequency of 1 rad/s.

Preferably the storage modulus G" as measured as described in the experimental section herein is in the range from 1 to 100 Pa at a frequency of 1 rad/s.

Preferably, the phase angle as measured as described in the experimental section herein is less than 70° at a frequency of 1 rad/s.

Therefore, in a preferred embodiment, the invention relates to a polymer of the invention, wherein the viscosity of an aqueous solution of the polymer at a polymer concentration of 0.5wt% is in the range of 1 to 200mPa.s as measured at a temperature of 50°C

In another aspect, the invention relates to an aqueous composition comprising the polymer of the invention in a concentration from 0.01 to 10wt% based on the total composition, for example in a concentration from 0.01 to at most 0.5wt% based on the total composition.

In order to keep the amount of chemicals needed for enhanced oil recovery as low as possible, the amount of polymer of the invention is preferably kept low, for example the amount of polymer of the invention in an aqueous composition used for enhanced oil recovery may be as low as 0.01wt% based on the total compositions. Surprisingly, concentration as low as 0.01wt% of the polymer of the invention already provide good viscoelastic properties of the aqueous solution.

In another aspect, the invention relates to a process for the preparation of a polymer according to the invention, comprising the step of

a) reacting a macroinitiator having at least 1 functional group, preferably a multifunctional initiator, in a solvent with acrylamide in the presence of a catalyst and a ligand to form a polymer comprising a central structure to which n branches are covalently attached, wherein n is an integer from 1 to 50, wherein the branches comprise polyacrylamide moieties, and

b) optionally contacting the product formed in step a) in a solvent with a hydrophobic monomer containing double bonds that is not acrylamide in the presence of a catalyst and a ligand to form a polymer comprising a central structure to which n branches are covalently attached, wherein n is an integer from 1 to 50, wherein the branches comprise a copolymer of polyacrylamide moieties and hydrophobic moieties, wherein the theoretical number average molecular weight of the polymer having branches comprising polyacrylamide moieties or of the polymer having branches comprising a copolymer of polyacrylamide moieties and hydrophobic moieties is at least 100,000g/mol.

The process of the invention is an atomic transfer radical polymerization (ATRP) process. This process shows good control (as is evidenced by the linear increase of the molecular weight with the conversion), a good concordance between the theoretical number average molecular weights with the experimental values and can provide polymers with a low polydispersity index (PDI).

Examples of macroinitiators are known to the skilled person and for example given in the experimental section. Preferably multifunctional initiators are used in the process of the invention and examples are known to the skilled person and described herein. Preferably, the macroinitiator is a functionalized polyketone as described above. The functionalized

polyketone is preferably a functionalized polyketone as presented in formula (4)

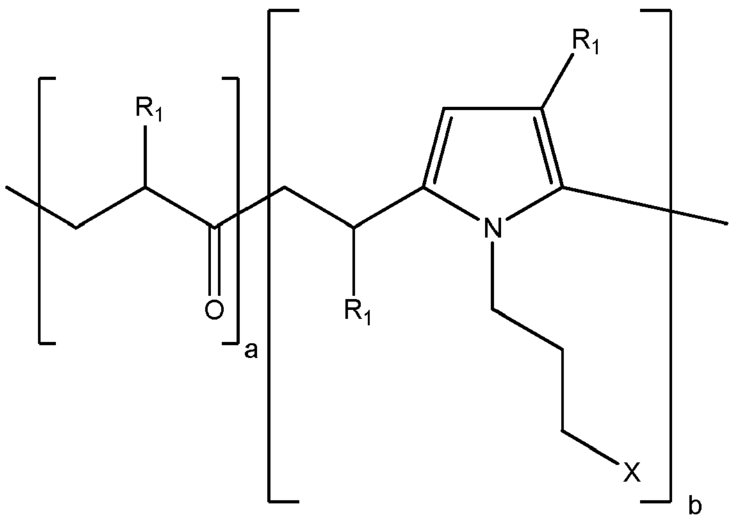

(4)

wherein R stands for H or methyl, wherein a is as defined above (a stands for an integer in the range from 1 up to and including 450) and wherein b is as defined above (b stands for an integer in the range from 1 up to and including 50).

The solvent in which step a) of the process of the present invention is performed is in principle not critical. The solvent may be a protic media or a non-protic media. A protic media is a media that comprises at least one component that is capable of being a proton donor. The protic media may comprise water and at least one alcohol and/or ketone for example. The alcohol of the protic media may be, for example, methanol, ethanol, propanol, isopropanol, butanol, isobutanol, heptanol or mixtures thereof. The ketone may be butylketone, methyletherketone, acetone or mixtures thereof. The solvent may also be a non-protic media, wherein the protic media comprises an aromatic solvent, such as, but not limited to dimethylformamide (DMF), dimethylsulfoxide (DMSO), acrylonitrile (ACN), chloroform, anisole, xylene, benzene, a halogenated benzene derivative, or other nonprotic solvent.

Preferably as a solvent in step a), water miscible solvents are used, more preferably preferably a mixture of water and at least one ketone, preferably acetone is used.

Catalysts suitable for the ATRP of step a) are known in the art and are for example described in US2007/0276101A1, hereby incorporated by reference.

Generally the catalyst comprises a transition metal, for example Cu, Fe, Ru or other transition metals that can undergo a one electron redox transition, preferably copper: Cu(I) or Cu(II) with a reducing agent. Preferably in the process of the invention Cu(I) is used, for example in the form of a halogen salt, such as copper(I)chloride or copper(I)bromide. It is clear to the skilled person that also mixtures of catalysts suitable for ATRP may be used in the process of the present invention.

Ligands suitable for the ATRP of step b) are known in the art and are for example described in US2007/0276101A1, hereby incorporated by reference. Examples of ligands include but are not limited to bpy (2,2'-bipyridine), dNbpy (4,4'-Di-5-nonyl-2,2'-bipyridine), tNtpy (4,4',4"-tris(5-nonyl)-2,2':6',2"-terpyridin), PMDETA (N,N,N',N',N"-Pentamethyldiethylenetriamine), HMTETA (1,1,4,7,10,10-Hexamethyltriethylenetetramine), $Me_6TREN$ (Tris(2-dimethylaminoethyl)amine), BPMODA (N,N-bis(2-pyridylmethyl)octadecylamine), TPEDA (N,N,N',N'-tetra[(2-pyridal) methyl]ethylenediamine), TPMA (tris[(2-pyridyl)methyl]amine), TREN (tris(2-aminoethyl)amine), $BA_6TREN$ (tris(2-bis(3-butoxy-3-oxopropyl)aminoethyl)amine), $EHA_6TREN$ (tris(2-bis(3-(2-ethylhexoxy)-3-oxopropyl)aminoethyl)amine), $LA_6TREN$ (Tris(2-bis(3-dodecoxy-3-oxopropyl)aminoethyl)amine) and mixtures thereof. Preferably, the ligand used is $Me_6TREN$ or TPMA, more preferably $Me_6TREN$.

In step b) of the process of the invention, the solvent is preferably the same as in step a). Examples of solvents include but are not limited to those listed above for step a).

In step b) of the process of the invention, the catalyst is preferably the same as in step a), but may also be different. Examples of catalysts include but are not limited to those listed above for step a).

In step b) of the process of the invention, the ligand is preferably the same as in step a), but may also be different. Examples of ligands include but are not limited to those listed above for step a).

Examples of hydrophobic monomer that may be used in step b) of the process of the invention include but are not limited to monomers chosen from the group of *N*-alkyl substituted acrylamides, for example *N*-isopropylacrylamide, N-2-hydroxyisopropylacrylamide, *N*,*N*-dimethylacrylamide, *N*-ethylacrylamide, *N,N*-ethylmethylacrylamide, *N*-*n*-propylacrylamide, *N-tert*-butylacrylamide, *N-n*-butylacrylamide, *N*,*N*-bis(2-methoxyethyl)acrylamide, *N*-3-methoxypropylacrylamide or ethoxypropylacrylamide; alkyl-substituted celluloses, for example methylcellulose or ethyl(hydroxyethyl)cellulose or hydroxypropylcellulose; and other monomers, such as (2-dimethylamino)ethyl methacrylate, vinyl methylether, *N*-vinylcaprolactam, propylene oxide, 2-dimethylaminoe ethyl methacrylate, 2-methyl-2-oxazoline, 2-isopropyl-2-oxazoline and mixtures thereof.

The order of addition of the macroinitiator having at least 1 functional group, the solvent and the acrylamide is not critical, for example the macroinitiator having at least 1 functional group, preferably the functionalized polyketone may first be dissolved in the solvent, preferably acetone, after which water may be added, to form a solution of the macroinitiator having at least 1 functional group in the solvent, e.g. a mixture of acetone and water after which the acrylamide is added to the solution.

In a preferred embodiment, the invention relates to a process comprising the step of

a) reacting a functionalized polyketone, in an acetone-water mixture with acrylamide in the presence of a copper(I) halogen catalyst and $Me_6TREN$ to form the corresponding polymer comprising a central structure to which n branches are covalently attached, wherein n is an integer from 1 to 50, wherein the branches comprise polyacrylamide moieties, and

b) optionally contacting the product formed in step a) in an acetone-water mixture with *N*-isopropylacrylamide in the presence of a copper(I)halogen catalyst and $Me_6TREN$ to form the corresponding polymer comprising a central structure to which n branches are covalently attached, wherein n is an integer from 1 to 50, wherein the branches comprise a copolymer of polyacrylamide moieties and *N*-isopropylacrylamide moieties, wherein the theoretical number average molecular weight of the polymer having branches comprising polyacrylamide moieties or of the polymer having branches comprising a copolymer of polyacrylamide moieties and *N*-isopropylacrylamide moieties is at least 100,000g/mol.

In another aspect, the invention also relates to a polymer obtained or obtainable by the process of the invention.

The amount of acrylamide used is in principle not critical. Preferred amounts and concentrations are those monomer concentrations commonly used in ATRP.

For example, the molar ratio of acrylamide to macroinitiator having at least 1 functional group and the acrylamide may be in the range from 100:1 to 500000:1, for example in the range from 200:1 to 350000:1.

The ratio of the amount of acrylamide to solvent is in principle not critical. However, for a good control of the polymerization and/or a lower PDI of the resulting polymer, it is preferred that the ratio of the amount of acrylamide (g) to solvent (ml) is in the range from 1:0.5 to 1:10, for example in the range from 1:1 to 1:9, for example from 1:2 to 1:8.

The amount of catalyst and ligand used in the process of the invention preferably are similar to the amounts generally used in ATRP.

For example, the catalyst and ligand may be used in a molar ratio in the range from 1:1 to 1:10, for example in the range from 1:1 to 1:5. For example, the amount of catalyst to macroinitiator having at least one functional group may be used in a molar ratio in the range from 1:1 to 1:10, for example in the range from 1:1 to 1:10.

The preferred conditions for conducting the process of the invention are those conditions typically used for ATRP and these conditions are known to the person skilled in the art.

For example, the temperature used, when the process is performed under atmospheric pressure (1013mbar), may be anywhere from room temperature (20°C) to 100°C.

For example, the process of the invention may be performed under pressures of up to 5 bar.

Preferably, for ease of production, the process is performed under atmospheric pressure and at room temperature.

In another aspect, the invention relates to the use of the polymer of the invention or of the composition comprising the polymer of the invention in enhanced oil recovery.

In another aspect, the invention relates to the use of the polymer of the invention or of a composition comprising the polymer of the invention as viscosity enhancing agents in paint, in hydraulic fluids, as flocculant, as lubricant, as thickener (e.g. in cosmetics), as rheology modifiers, to facilitate the transport of fluids, for example liquids, as a mobility control agent or as drag reducers.

It is noted that the invention relates to all possible combination of features recited in the description, especially the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention is now elucidated by way of the following examples without however being limited thereto.

Examples

The following scheme schematically represents the different syntheses that were performed in the experimental section:

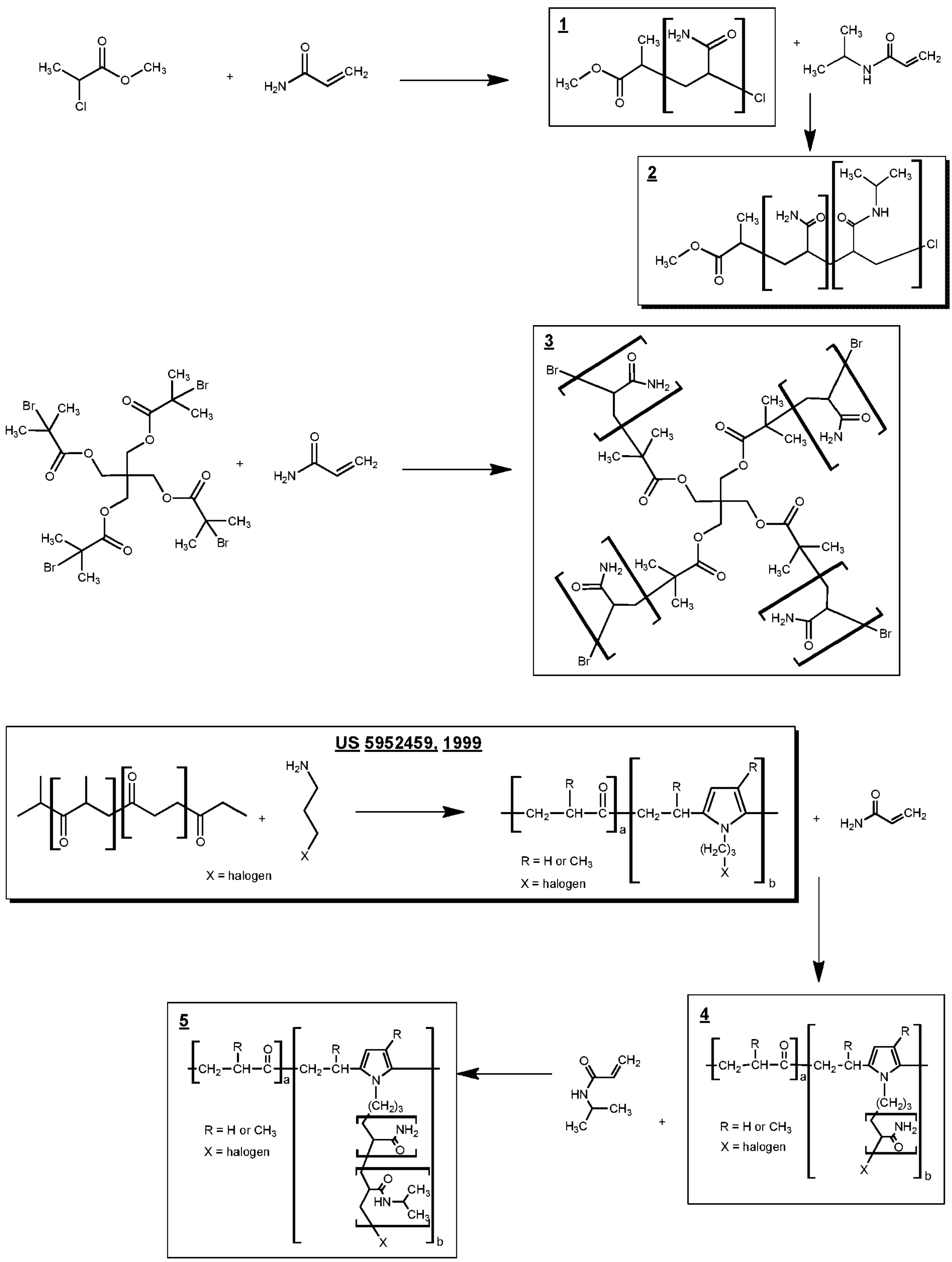

**Synthesis**

**Chemicals.** Acrylamide (AM) (electrophoresis grade, ≥99%), *N*-isopropylacrylamide (NIPAM) (97%), tris[2-(dimethylamino)ethyl]amine ($Me_6$TREN) copper(I) bromide (CuBr, 98%), copper(I) chloride (CuCl, 98%) and methyl 2-chloropropionate MeClPr, 97%) were purchased from Sigma Aldrich. CuBr and CuCl were purified by stirring in glacial acetic acid (Aldrich), washing with glacial acetic acid, ethanol and diethyl ether (in that order) and then dried under vacuum. All solvents were reagent grade and used without further purification.

**General ATRP of acrylamide in water (linear (<u>1</u>) and 4-arm star polymers(<u>3</u>)).** A 250 mL three-necked flask was charged with ,e.g. ATRP-76, 5.0049 g of, acrylamide (AM). A magnetic stirrer and distilled water were added and subsequently degassed by three freeze-pump-thaw cycles. The flask was then placed in an oil bath at 25 °C. Afterwards the catalyst (CuCl, 18.5 mg) and ligand (tris[2-dimethylamino)ethyl]amine ($Me_6$TREN), 41.3 mg) were added and the mixture was stirred for 10 minutes. For the linear polymers [1], the reaction was started by adding the initiator methyl-2-chloropropionate (18.4 mg) using a syringe. After the reaction the mixture was exposed to air and the polymer was precipitated in a tenfold amount of methanol. The polymer was dried in an oven at 65 °C up to constant weight.

The synthesis procedure for the 4-arm star polymers (**<u>3</u>**) was slightly different. A 250 mL three-necked flask was charged with the initiator pentaerythritol tetrakis(2-bromoisobutyrate) [C-$Br_4$] (e.g. ATRP-89, 26.2 mg) and acrylamide (AM, 5.0002 g). A magnetic stirrer and distilled water were added and subsequently degassed by three freeze-pump-thaw cycles. The flask was then placed in an oil bath at 25 °C. Afterwards the catalyst (CuBr, 30.5 mg) was added. The reaction was started by adding the ligand ($Me_6$TREN, 44.2 mg) using a syringe. After the reaction the mixture was exposed to air and the polymer was precipitated in a tenfold amount of methanol. The polymer was dried in an oven at 65 °C up to constant weight.

**Chain extension.** Acrylamide was polymerized using the ATRP method as described before. After 1 hour of reaction an aliquot was taken for analysis. After this, a fresh batch of AM/$Me_6$TREN/CuBr (5.0031g/52.2 mg/34.5 mg) was added while making sure that the reaction mixture was not exposed to air. The polymerization with the fresh batch was continued for a further period of 2 hours after which a sample was taken for analysis.

**Block copolymerization, synthesis of PAM-*b*-PNIPAM (<u>2</u>).** The macroinitiator PAM-Cl was synthesized according to the aforementioned procedure. To a round bottomed flask the macroinitiator (0.4186 g) was added along with NIPAM (*N*-isopropylacrylamide, 1.0003 g). Double distilled water was added (6 ml) and the mixture was degassed by three freeze-pump-thaw cycles followed by the addition of the catalyst (CuBr, 4.2 mg). The flask was placed in a thermostated oil bath at 25 °C. To start the reaction, the ligand ($Me_6$TREN, 3.8 mg) was added.

A sample of the synthesized block copolymer PAM-*b*-PNIPAM was thoroughly washed five times with THF. The washed sample was dried in an oven at 65 °C. A $^1$H-NMR spectrum was recorded for both the washed and virgin samples.

**Synthesis macroinitiator (**US 5952459**).** The bulk functionalization was performed according to Zhang *et al.*[1]. The reactions were performed in a sealed 250 ml round bottom glass reactor with a reflux condenser, a U-type anchor impeller, and an oil bath for heating. The 3-bromo(or chloro)propylamine hydrochloride(or bromide) hydrochloride(or bromide(14.8275 g) was dissolved in methanol (reagent grade) to which an equimolar amount of sodium hydroxide (3.2278 g) was added to form the non-salt form of the amine.. After the polyketone (15.0 g) was preheated to the liquid state at the employed reaction temperature (100 °C), the amine was added drop wise (using a drop funnel) into the reactor in the first 20 min. The stirring speed was set at a constant value of 500 RPM. During the reaction, the mixture of the reactants changed from the slight yellowish, low viscous state, into a highly viscous brown homogeneous paste. The product was dissolved in chloroform and afterwards washed with milliQ-water in a separatory funnel. The polymer was isolated by evaporating the chloroform. The product, a brown viscous paste (low functionalization degree) or a brown powder (high functionalization degree), was finally freeze dried and stored at -18 °C until further use.

**Synthesis, comb polymers (4).** A 250 mL three-necked flask was charged with the macroinitiator (e.g. ATRP-129, 41.5 mg) prepared as above. Enough acetone (10 ml) was added to dissolve the macroinitiator. To the solution milliQ water (300 ml) was added and acrylamide (50.2114 g). Subsequently, the mixture was degassed by three freeze-pump-thaw cycles. A nitrogen blanket was maintained throughout the remainder of the reaction steps. CuX (CuBr, 3.7 mg) was then added to the flask and the mixture

[1] Zhang, Y.; Broekhuis, A. A.; Stuart, M. C. A.; Picchioni, F. J Appl Polym Sci 2008, 107, 262-271. stirred for 10 minutes. The flask was then placed in an oil bath at 25 °C. The reaction was started by the addition of the ligand ($Me_6$TREN, 5.0 mg) using a syringe. After the reaction, the mixture was exposed to air and the polymer was precipitated in a tenfold amount of methanol. For the higher molecular weight polymers the solution was first diluted with milliQ water before being precipitated. The polymer was isolated by filtration and subsequently dried in an oven at 65 °C.

**Block copolymerization, synthesis of PK(bb)-PAM(*g*)-*b*-PNIPAM (<u>5</u>).** The macroinitiator (comb polymer) was synthesized according to the aforementioned procedure. To a round bottomed flask the macroinitiator (3.6033 g) was added along with NIPAM (9.0087). Double distilled water was added (200 ml) and the mixture was degassed by three freeze-pump-thaw cycles followed by the addition of the catalyst. The flask was placed in a thermostated oil bath

at 25 °C. To start the reaction, the ligand ($Me_6TREN$, 5.3 mg)) was added.

**Characterization**

The acrylamide conversion was measured using Gas Chromatography (GC). The samples were dissolved in acetone (polymer precipitates) and injected on a Hewlett Packard 5890 GC with an Elite-Wax ETR column.

Nuclear Magnetic Resonance (NMR) spectra were recorded on a Varian Mercury Plus 400 MHz spectrometer. For analysis $D_2O$ was used as the solvent.

Gel permeation chromatography (GPC) analysis of all the water-soluble samples was performed on a Agilent 1200 system with Polymer Standard Service (PSS) columns (guard, $10^4$ and $10^3$ Å) with a 50 mM $NaNO_3$ aqueous solution as the eluent. The columns were operated at 40 °C with a flowrate of 1.00 ml/min, and a refractive index (RI) detector (Agilent 1200) was used at 40 °C. The apparent molecular weights ($M_n$ and $M_w$) and polydispersities (PDI) were determined using a polyacrylamide (PAM) based calibration with WinGPC software (PSS).

**Rheological characterization** (solution viscosity, shear thinning, $\eta_o$, PDI, G', G" and phase angle). The aqueous polymeric solutions were prepared by swelling the polymers in water for at least a couple of hours and afterwards gently stirring the solution overnight (the higher molecular weight polymers required longer stirring times). For the salt solutions, sodium chloride was dissolved in milli-Q water up to the correct concentrations. The polymers were then dissolved, herein, according to the aforementioned procedure.

Viscometric measurements were performed on a HAAKE Mars III (ThermoScientific) rheometer, equipped with a cone-and-plate geometry (diameter 60 mm, angle 2°). Flow curves were measured by increasing the shear stress by regular steps and waiting for equilibrium at each step. The shear rate ($\gamma$) was varied between 0.1 - 1750 $s^{-1}$. Dynamic measurements were performed with frequencies ranging between 0.04 - 100 rad/s (i.e., $6.37.10^{-3}$ - 15.92 Hz). It must be noted that all the dynamic measurements were preceded by an oscillation stress sweep to identify the linear viscoelastic response of each sample. With this, it was ensured that the dynamic measurements were conducted in the linear response region of the samples.

**Conclusions for the synthesis**

From the above, it can be concluded that

- Branched polyacrylamides of the invention can be prepared using aqueous ATRP of acrylamide
- Comb polyacrylamides of the invention can be prepared by the usage of functionalized polyketones as the macroinitiator.
- The living nature of the aqueous ATRP of acrylamide allows for the synthesis of blockcopolymers, where the second monomer can be a hydrophobic monomer, for instance*N*-isopropylacrylamide (NIPAM).

**Determination of the properties of the synthesized polymers.**

**$M_n$, theoretical**

The conversion of acrylamide is measured with Gas Chromatography (GC, example conversion = 75.3%). The theoretical number average total molecular weight of the polymer of the invention is defined according to formula (I):

$$M_{n,\text{ theoretical}} = ([\text{M:I}] \text{ x conversion x } n_{\text{acrylamide}}) + M_{n,\text{ macroinitiator}} \qquad \text{(formula (I)}$$

wherein M:I stands for the ratio between $W_m/n_{acrylamide}$ and $W_iM_{n,macroinitiator}$, wherein $W_m$ is the monomer weight (in g) and wherein $W_i$ is the weight of the initiator (in g) and wherein $n_{acrylamide}$ stands for the molecular weight of the monomer acrylamide and wherein $M_{n,macroinitiator}$ stands for the number average total molecular weight of the macroinitiator as determined using GPC as described herein or for the molecular weight of the initiator compound.

The values used for this calculation were as follows:

Monomer (weight, $W_m$) = 30.1168 g
$n_{acrylamide}$ = 71.08 g/mol
Initiator (weight, $W_i$)

$M_{w, macroinitiator}$ = 2797 g/mol (measured with $GPC_{w, C-Br4}$ = 732.09 g/mol

**Number of branches**

The number of branches was determined using the following formula (II)

$$\text{Number of side chains } n_N = \left(\frac{M_{PK}}{M_{repeating\ unit\ PK}}\right)\cdot x_{CO} = \left[\frac{M_{PK}}{131.6}\right]\cdot x_{CO} \qquad \text{formula (II)}$$

wherein $M_{PK}$ stands for the molecular weight of polyketone, wherein $M_{repeating\ unit\ PK}$ stands for the molecular weight of the repeating unit of polyketone, wherein $x_{CO}$ stands for the conversion of the carbonyl groups according to formula (III)

$$x_{CO} = \frac{2\cdot y}{x+2\cdot y}\cdot 100 = \frac{\left(2\cdot\frac{N(wt\%)}{mol_N}\right)}{\left(\frac{\frac{C(wt\%)}{mol_C}-\left(\left(\frac{N(wt\%)}{mol_N}\right)\cdot\overline{n_C^y}\right)}{\overline{n_C^x}}\right)+\left(2\cdot\frac{N(wt\%)}{mol_N}\right)}\cdot 100 \qquad \text{(III)}$$

wherein N stands for the amount of N in the polymer (determined by elemental analysis), wherein C stands for the amount of C in the polymer (determined by elemental analysis), wherein $mol_N$ stands for the molecular weight of nitrogen (14.0067 g/mol), wherein $mol_c$ stands for the molecular weight of carbon (12.01 g/mol), wherein, $n_c^a$ stands for the number of carbons in a (unfunctionalized part of the functionalized polyketone), wherein $n_c^b$ stands for the number of carbons in b (functionalized part of the functionalized polyketone, that is the part of the polyketone that contains branches) , wherein $x_{CO}$ stands for the conversion of the carbonyl units (in wt.%).

The following numbers were used to calculate the number of branches $n_N$

$mol_N$ = 14.0067 g/mol
$mol_C$ = 12.01 g/mol

**Results**

In Table 1 below, the properties of the polymers used in the experimental section are listed:

*Table 1: Overview of properties of the polymers used In the experimental section*

| Polymer name | Initiator | $M_{n,exp}$ (g/mol) | $M_{n,th}$ (g/mol) | $M_w$ (g/mol) | PDI | number of branches ($N_b$) | $M_{n,th}$ / $N_b$ | Hydrolyzation (%) |
|---|---|---|---|---|---|---|---|---|
| ATRP-76 | MeClPr[a] | 22863 | 25 469 | 32465 | 1.42 | 1 | 25 469 | 0 |
| ATRP-87 | MeClPr[a] | 69 100 | 101 529 | 150700 | 2.18 | 1 | 101 529 | 0 |
| ATRP-137 | MeClPr[a] | 108 800 | 233659 | 250600 | 2.33 | 1 | 233659 | 0 |
| ATRP-131 | MeClPr[a] | 210200 | 624 323 | 472900 | 2.25 | 1 | 624 323 | 0 |
| ATRP-89 | $C-Br_4$[b] | 79680 | 114 811 | 163 800 | 2.06 | 4 | 28 703 | 0 |
| ATRP-114 | $C-Br_4$[b] | 107 800 | 166 718 | 207 400 | 1.92 | 4 | 41 680 | 0 |
| ATRP-116 | $C-Br_4$[b] | 216500 | 290784 | 435 100 | 2.01 | 4 | 72696 | 0 |
| ATRP-124 | $PK-Cl_{12}$ | 72020 | 70 108 | 206200 | 2.86 | 12 | 5842 | 0 |

(continued)

| Polymer name | Initiator | $M_{n,exp}$ (g/mol) | $M_{n,th}$ (g/mol) | $M_w$ (g/mol) | PDI | number of branches ($N_b$) | $M_{n,th}$ / $N_b$ | Hydrolyzation (%) |
|---|---|---|---|---|---|---|---|---|
| ATRP-108 | PK-$Cl_{12}$ | 104850 | 130 399[c] | 241 155 | 2.30 | 12 | 10867 | 0 |
| ATRP-107 | PK-$Cl_{12}$ | 206 400 | 312 000[c] | 480 910 | 2.33 | 12 | 26 000 | 0 |
| ATRP-123 | PK-$Cl_{12}$ | 271 600 | 643296 | 534200 | 1.97 | 12 | 53608 | 0 |
| ATRP-129 | PK-$Cl_{12}$ | 356300 | 1 661 602 | 660400 | 1.85 | 12 | 138 467 | 0 |
| ATRP-146 | PK-$Cl_{13}$ | 834 700[d] | 2 823 287 | 1 527000[d] | 1.83[d] | 13 | 217 176 | 0 |
| ATRP-159 | PK-$Cl_{13}$ | - | 3 360 971 | - | - | 13 | 258536 | 0 |
| FA 920 MPM | | 295 400[d] | 4 500 000[e] | 1 140 000 | 3.82[d] | 1 | 4 500 000 | 0 |
| PAM[e] | - | 345 000[d] | 5 500 000[f] | 1 521 450[d] | 4.41[d] | 1 | 5 500 000 | 0 |
| FA 920 | - | - | 6 000 000[e] | - | - | 1 | 6000000 | 0 |
| Flopaam 3130 S | - | - | 3 200 000[f] | - | - | 1 | 3 200 000 | 25-35 |
| Flopaam 3230 S | - | - | 5 700 000[f] | - | - | 1 | 5 700 000 | 25-35 |
| ATRP-95 | ATRP-76 | - | 28280 | - | - | 1 | 28280 | 0 |
| ATRP-127[g] | ATRP-123 | - | 660949 | - | - | 12 | 55079 | 0 |

a. Methyl 2-chloropropionate
b. Pentaerythritol tetrakis(2-bromoisobutyrate)
c. Conversion (required to calculate $M_{n\ th}$) determined gravimetrically
d. Above the limit of the calibration curve of the GPC
e. $M_w$ according to the supplier SNF
f. According to the supplier Sigma Aldrich (5 000 000 < $M_w$ < 6 000 000 g/mol), Lot# = 0001412612, Pcode = 100934278
g. Contains 13 units of NIPAM on each arm, ATRP-123 acted as the macroinitiator in the synthesis of the NIPAM block

**Parameters important for EOR.**

The purpose of water-soluble polymers in enhanced oil recovery (EOR) is to improve the rheological properties of the displacing fluid (water). The oil production increases with the microscopic sweep of the reservoir and the displacement efficiency of the oil[2]. Indeed, the use of water-soluble polymers improves the water-oil mobility ratio[2], and leads to enhanced oil recovery. However, given the harsh conditions present in most oil reservoirs, new problems and limitations arise with the use of water-soluble polymers. Besides positively affecting solution rheology, water-soluble polymers should preferably also withstand high salt concentration, the presence of calcium, high temperatures (>70 °C) and/or long injection times (at least 12 months)[2, 3]. High salt concentrations reduce the thickening capability of most ionic water-soluble polymers while the presence of calcium leads to flocculation[4]. Several studies[5678910] demonstrated that the oil is produced faster using polymer flooding (compared to water flooding), but also more oil can be recovered due to the viscoelastic properties of the polymers.

[2] Lake, L. Englewood Cliffs, NJ, Prentic-Hall Inc., **1989**.
[3] Sorbie, K. S. Boca Raton, FL, CRC Press., **1991**.
[4] Levitt, D.B.; Pope, G.A.; SPE Improved Oil Recovery Symp, 2008, 1-18.
[5] Zhang, L.-J.; Yue, X.-A.; J Cent South Univ Tech, 2008, 15, 84-87.
[6] Zhang, L.-J.; Yue, X.-A.; Guo, F.; Pet Sci, 2008, 5, 56-61
[7] wang, D.; Xia, H.; Liu, Z.; Anda, Q.; Yang, Q; SPE Asia Pacific Oil Gas Confr, 2001, 1-9.
[8] Yin, H.; Wang, D.; Zhong, H.; SPE Ann Tech Confr, 2006, 1-10.

[9] Wang, D.; Cheng, J.; Yang, Q.; Gong, W.; Li, Q.; Chen, F.; SPE Ann Tech Confr, 2000, 1-10.
[10] Xia, H.; Ju, Y.; Kong, F.; Wu, J.; SPE Ann Tech Confr, 2004, 1-8.

**Results**

Brief description of the figures

In figure 1 (Fig. 1), the polydispersity index (PDI), the theoretical and actual molecular weights of the synthesis of ATRP-123 are plotted against the conversion.

In figure 2 (Fig. 2), the GPC traces are shown for the polymer_*(—)* and for the chain extended polymer (- - -).

Figure 3 (Fig. 3) displays the $^1$H-NMR spectra of the block copolymer PAM-b-PNIPAM (virgin and THF washed) and PAM.

Figure 4 (Fig. 4) shows the variation in the apparent solution viscosity as a function of the polymer concentration for linear (blocks), 4-arm star (circles) and 12-arm comb-like (triangles) polyacrylamides at two different average molecular weights ($M_{n,exp} \approx$ 75 000 g/mol [A] and $M_{n,exp} \approx$ 105 000 g/mol [B]).The comparison is made between ATRP-87, ATRP-89 and ATRP-124 [A] and ATRP-137, ATRP-114 and ATRP-108 [B].

Figure 5 (Fig. 5) is a schematic presentation of the comparison method between linear and star-branched polymers.

Figure 6 (Fig. 6) gives the apparent viscosity (measured at $\gamma$ = 10 $s^{-1}$) as a function of the polymer concentration at two different molecular weights ($M_{n,SPAN} \approx$ 70 000 g/mol [A] and $M_{n,\ SPAN} \approx$ 110 000 [B]). The $M_{n,\ SPAN}$ is based on the theoretical molecular weight. The molecular weight of the linear polymers is the one measured with GPC ($M_{n,exp}$).

Figure 7 (Fig. 7) shows the solution viscosity of three commercial polyacrylamides (open symbols) compared to branched polyacrylamide (closed symbols) at two polymer concentrations (4975 ppm and 1.96 wt.%) with the shear rate ($\gamma$) ranging between 0.1 - 1750 $s^{-1}$.

Figure 8 (Fig. 8) shows the: storage modulus G',the loss modulus G" and phase angle vs. frequency of the comb polyacrylamide (triangles ATRP-129) and commercial linear polyacrylamide (squares) at a polymer concentration of 2 wt.%.

Figure 9 (Fig. 9) shows the viscosity as a function of temperature for linear commercial polyacrylamide (squares), branched polyacrylamide-backbone-polyketone (circles, ATRP-123) and branched poly(acrylamide-b-isopropylacrylamide)-backbone-polyketone (triangles, ATRP-127).

Figure 10 (Fig. 10) shows the solution rheology of 12-arm comb PAM ($M_w = 2.8 \cdot 10^6$ g/mol, circles), linear HPAM ($M_w = 3.2 \cdot 10^6$ g/mol, squares) and linear HPAM ($M_w = 5.8 \cdot 10^6$ g/mol, triangles) at a polymer concentration of 4975 ppm.

Figure 11 (Fig. 11) shows the viscoelastic properties of a linear HPAM (Flopaam 3130 S) (A) and a 12-arm PAM (B) at different salt concentration. The polymer concentration is 9900 ppm.

**Results: synthesis**

As can be seen from figure 1, in the preparation of ATRP-76 the molecular weights increased linearly with conversion and the $M_n$'s were in fair agreement (especially at medium molecular weights) with the theoretical values (see Figure 1).

**Chain extension.** For the chain extension, after a one hour reaction period, a conversion of 90.7% was reached yielding the PAM-CL macroinitiator ($M_n$ = 22 780 g/mol [$M_{n,th}$ = 24 692 g/mol], PDI = 1.42). After this, a second batch containing the same concentration of monomer, catalyst (halogen exchange principle) and ligand was added. The conversion of AM (second block) reached 41.0% after 2 h. The chain extended polymer had a $M_n$ of 30 220 g/mol and a PDI of 1.64 ($M_{n,th}$ = 35 854). This result indicates that the halogen group is not lost during the ATRP of AM and in figure 2, which shows the GPC results of the chain extension, the living nature of the polymerization is also demonstrated.

**Covalent linking of NIPAM units.** Figure 3 displays the $^1$H-NMR spectra of the block copolymer and of the THF washed one. The block copolymer PAM-*b*-PNIPAM (**2**) was prepared according to scheme 1. The block copolymer has a low polydispersity (PDI = 1.48) and a monomodal GPC trace. The conversion of NIPAM was determined by using the ratio between the resonances of AM and NIPAM units. The conversion equalled 5% corresponding to a degree of polymerization (DP) of 25 and a $M_n$ of 2 811 g/mol. In addition, washing with THF did not change the ratio between the resonances of the AM and NIPAM units. This confirms that the NIPAM units are covalently linked to the PAM macroinitiator.

**Results: rheological properties**

**Apparent solution viscosity.** When the apparent solution viscosity is plotted against the polymer concentration (Figure 4) a markedly different behavior can be observed for the branched/comb polymers compared to their linear analogues. In Figure 4 three different polyacrylamides are compared, a linear, a (4-arm) star and a comb-like (12-arm). The solution viscosity ($\gamma$ = 10 $s^{-1}$) is similar for all the polymers at low concentration. As the concentration of the polymeric solution increases the observed behavior depends on the architecture of the polymer. The star polymer displays lower solution viscosity compared to its linear analogue.

The three different polymers can also be compared using a different approach (see Figure 5), where the span molecular weights ($M_{n,SPAN}$) of the star/branched polymers are similar to the molecular weight of the linear one.[19]

**Solution viscosities at different SPAN molecular weights.** The comparison of solution viscosities was also made for the star/branched polyacrylamides at two different SPAN molecular weights. The results are given in Figure 6. As can be observed in Figure 6, the increase in solution viscosity with concentration is dependent on the molecular weight of the samples and the topology. At the lowest molecular weight studied (Figure 6, A) the solution viscosity of the star polymers increases in a similar fashion compared to the linear one while the comb-like displays a more pronounced increase with increase in the concentration. At a higher molecular weight (Figure 6, B) both the star and comb-like polyacrylamides display a more pronounced increase in solution viscosity with increase in concentration compared to the linear one (with similar $M_{w,\ span}$), with the comb-like showing the highest viscosity.

**Solution viscosities at higher molecular weights.** The solution viscosity at higher molecular weights was also investigated. Three samples with theoretical molecular weights of 1.7, 2.8 and $3.4 \cdot 10^6$ g/mol were compared to a commercial one ($5.10^6 \leq M_w \leq 6 \cdot 10^6$ g/mol). In Figure 7 the solution viscosities of the solutions are plotted against the shear rate for the commercial sample and the branched synthesized ones at two different polymer concentrations (0.5 and 2.0 wt.%). All three branched samples display at both polymer concentrations a higher solution viscosity at all shear rates (1), more pronounced shear thinning (2) and a much higher $\eta_0$ (3).

**Viscoelasticity of the comb polymers.** The loss and storage modulus (respectively G' and G") were measured along with the phase angle. The commercial polyacrylamide is compared to the comb polyacrylamide (ATRP-129) in Figure 8. As can be observed in Figure 8 the comb polymer solution displays a more elastic behavior compared to the linear analogue. Although the molecular weight of the linear polyacrylamide is larger, its elastic response is still less pronounced compared to the comb one.

**Solution viscosity of the terpolymers (with NIPAM) at elevated temperatures.** The solution rheology of the terpolymers (containing NIPAM moieties) was measured as a function of temperature. The results are plotted in Figure 9. The solution viscosities of both the linear and branched polyacrylamides decrease with increase in the temperature. However, the terpolymer (branched polyacrylamide with 13 units of NIPAM on each arm) displays an increase in viscosity above 40 °C.

**Solution viscosity in salt solutions.** The solution viscosity was measured as a function of the salt concentration and compared to commercial partially hydrolyzed polyacrylamide (HPAM, Flopaam series of SNF). As can be observed in Figure 10, the solution viscosity of the branched non-ionic polyacrylamide is independent of the salt concentration.

**Viscoelasticity in salt solutions.** The loss and storage modulus (respectively G' and G") were measured along with the phase angle as a function of the salt (NaCl) concentration. Two commercial partially hydrolyzed polyacrylamides are compared to the comb polyacrylamide (ATRP-146). As can be seen in Figure 11, the elastic response of the polymer of the invention is still good despite the presence of salt, whereas the elastic response decreases in the presence of salt for the linear polyacrylamide.

**Conclusions**

As can be seen from the above results,

- the branched (comb) polyacrylamides of the invention have better thickening capabilities than linear analogues of the same molecular weight. Therefore, they may advantageously be used as thickeners or in EOR.
- Water solutions containing branched polyacrylamides of the invention display more pronounced elastic response compared to their linear analogues of the same molecular weight, making them more suitable for use in EOR.

- The rheological properties of water solutions containing branched polyacrylamides of the invention are independent of the presence of salt.
- Water solutions containing terpolymers of polyketone, polyacrylamide and poly(N-isopropylacrylamide) display thermothickening behavior (increase in solution viscosity with increase in temperature), making them excellent for use in EOR at the temperatures commonly used for EOR.

## Claims

1. Polymer comprising a central structure to which n branches are covalently attached, wherein n is an integer from 1 to 50, wherein the branches comprise polyacrylamide moieties, wherein the theoretical number average total molecular weight of the polymer is at least 100,000g/mol.

2. Polymer according to claim 1, wherein the polydispersity index of the polymer is at most 2.5.

3. Polymer according to claim 1 or claim 2, wherein the branches further comprise hydrophobic moieties.

4. Polymer according to claim 3, wherein the hydrophobic moieties are formed by polymerization of hydrophobic monomers containing double bonds chosen from the group of *N*-alkyl substituted acrylamides, for example *N*-isopropylacrylamide, *N*-2-hydroxyisopropylacrylamide, *N*,*N*-dimethylacrylamide, *N*-ethylacrylamide, *N,N*-ethylmethylacrylamide, *N*-*n*-propylacrylamide, *N*-*tert*-butylacrylamide, *N*-*n*-butylacrylamide, *N*,*N*-bis(2-methoxyethyl)acrylamide, *N*-3-methoxypropylacrylamide or ethoxypropylacrylamide; alkyl-substituted celluloses, for example methylcellulose or ethyl(hydroxyethyl)cellulose or hydroxypropylcellulose; and other monomers, such as (2-dimethylamino) ethyl methacrylate, vinyl methylether, *N*-vinylcaprolactam, propylene oxide, 2-dimethylaminoe ethyl methacrylate, 2-methyl-2-oxazoline, 2-isopropyl-2-oxazoline and mixtures thereof, preferably N-isopropylacrylamide.

5. Polymer according to any one of claims 1-4, wherein the polymer is a random copolymer represented by formula (1)

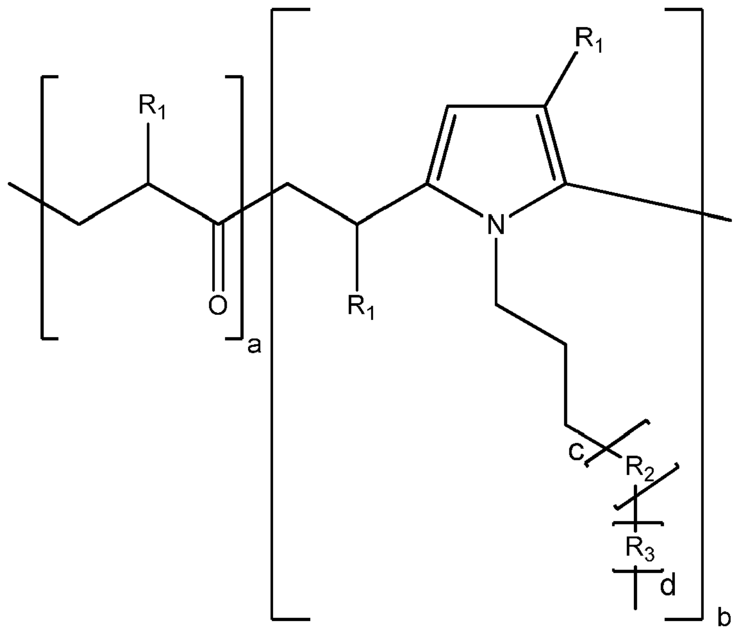

(1)

wherein $R^1$ stands for H or methyl,
wherein $R^2$ stands for a polyacrylamide moiety according to formula (2)

$R_2$ = 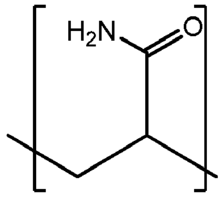

(2)

wherein $R^3$ stands for a hydrophobic moiety,
wherein a stands for an integer in the range from 1 up to and including 450, wherein b stands for an integer in the range from 1 up to and including 50, wherein c stands for an integer in the range from 3 up to and including 300,000 and wherein d stands for an integer in the range from 0 to 100,000.

**6.** Polymer according to any one of claims 1-5, wherein the degree of hydrolyzation of the polymer is at most 50%, preferably at most 25%, most preferably at most 5%.

**7.** Polymer according to any one of claims 1-6, the theoretical number average total molecular weight divided by the number of branches is in the range from 10,000 to 7,000,000 g/mol.

**8.** Polymer according to any one of claims 1-7, wherein the viscosity of an aqueous solution of the polymer at the polymer concentration of 0.5 wt% is in the range of 1 to 200 mPa.s as measured at a temperature of 50°C.

**9.** Aqueous composition comprising the polymer of any one of claims 1-8 in a concentration from 0.01 to 10wt% based on the total composition.

**10.** Process for the preparation of a polymer according to any one of claims 1-8, comprising the step of

a) reacting a macroinitiator having at least 1 functional group, preferably a multifunctional initiator, in a solvent with acrylamide in the presence of a catalyst and a ligand to form a polymer comprising a central structure to which n branches are covalently attached, wherein n is an integer from 1 to 50, wherein the branches comprise polyacrylamide moieties, and
b) optionally contacting the product formed in step a) in a solvent with a hydrophobic monomer containing double bonds that is not acrylamide in the presence of a catalyst and a ligand to form a polymer comprising a central structure to which n branches are covalently attached, wherein n is an integer from 1 to 50, wherein the branches comprise a copolymer of polyacrylamide moieties and hydrophobic moieties,
wherein the theoretical number average molecular weight of the polymer having branches comprising polyacrylamide moieties or of the polymer having branches comprising a copolymer of polyacrylamide moieties and hydrophobic moieties is at least 100,000g/mol.

**11.** Process according to claim 10, wherein the initiator is a (halogen) functionalized polyketone.

**12.** Use of the polymer of any one of claims 1-8 or of a composition comprising the polymer of any one of claims 1-8 or of the composition of claim 9 in enhanced oil recovery.

**13.** Use of the polymer of any one of claims 1-8 or of a composition comprising the polymer of any one of claims 1-8 or of the composition of claim 9 as viscosity enhancing agents in paint, in hydraulic fluids, as flocculant, as lubricant, as thickener (e.g. in cosmetics), as rheology modifiers, to facilitate the transport of fluids, for example liquids, as a mobility control agent or as drag reducer.

**14.** Polymer obtained or obtainable by the process of claim 10.

**15.** Polymer obtained or obtainable by the process of claim 11.

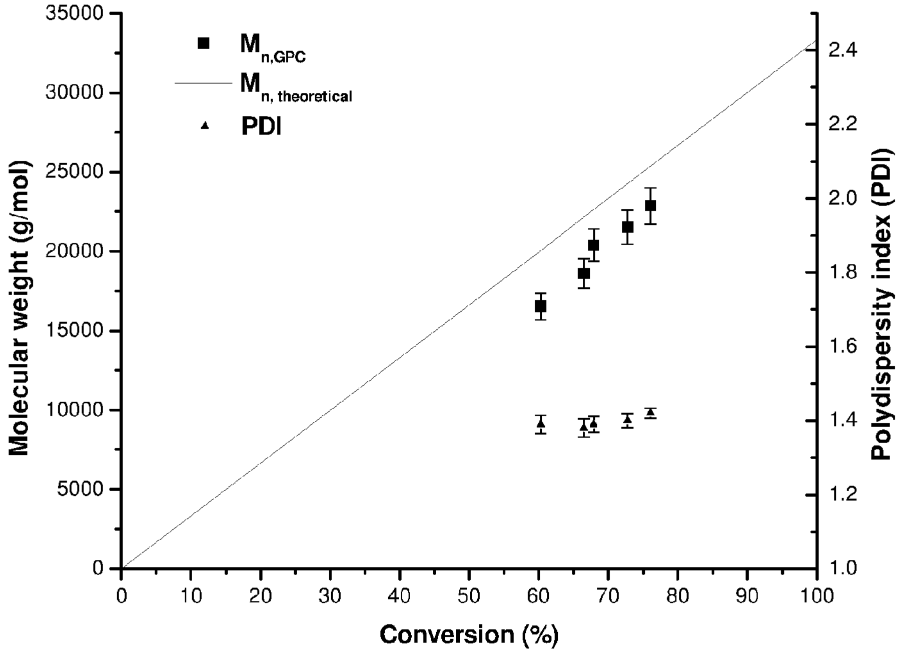

Molecular weight (g/mol)
Polydispersity index (PDI)
Conversion (%)
$M_{n,GPC}$
$M_{n, theoretical}$
PDI
0
5000
10000
15000
20000
25000
30000
35000
1.0
1.2
1.4
1.6
1.8
2.0
2.2
2.4
0 10 20 30 40 50 60 70 80 90 100


Fig. 1

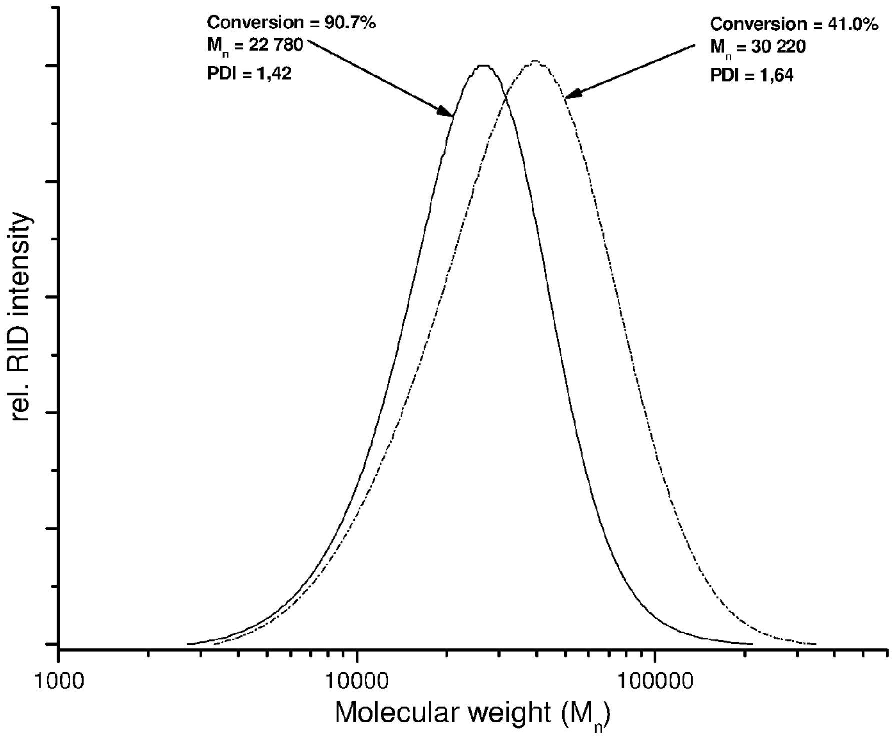

Conversion = 90.7%
$M_n$ = 22 780
PDI = 1,42
Conversion = 41.0%
$M_n$ = 30 220
PDI = 1,64
rel. RID intensity
1000
10000
100000
Molecular weight ($M_n$)


Fig. 2

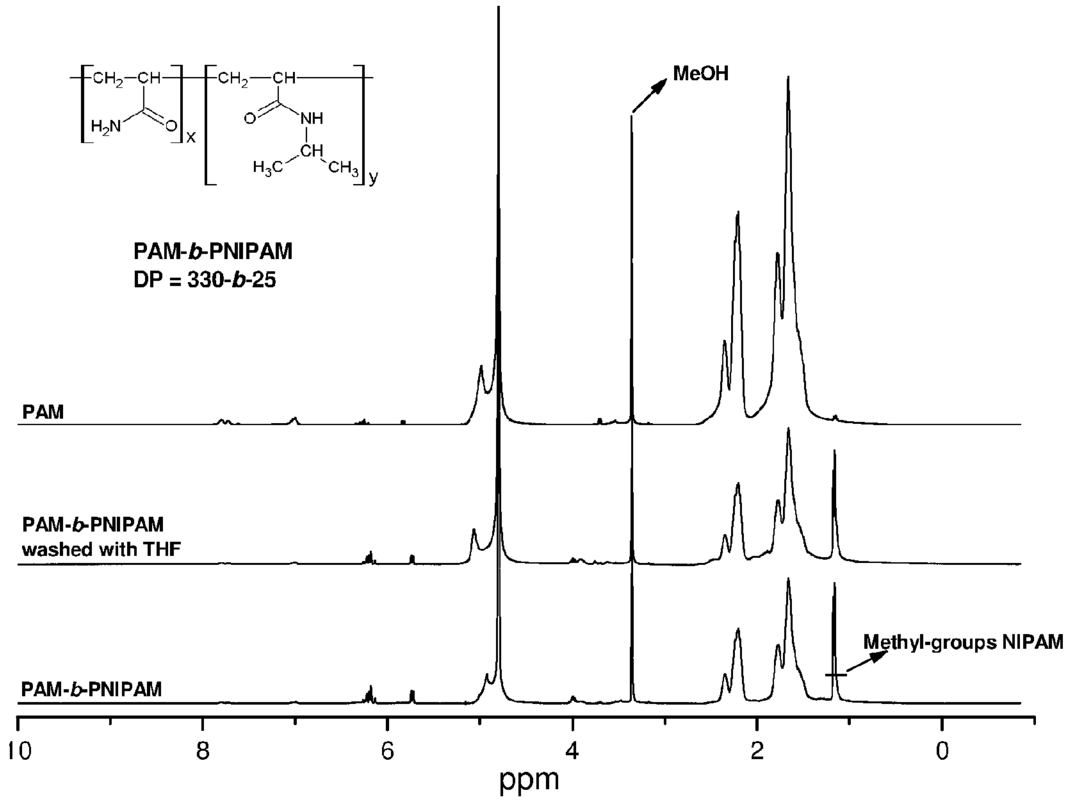
MeOH
PAM-*b*-PNIPAM
DP = 330-*b*-25
PAM
PAM-*b*-PNIPAM
washed with THF
Methyl-groups NIPAM
PAM-*b*-PNIPAM
10
8
6
4
2
0
ppm

Fig. 3

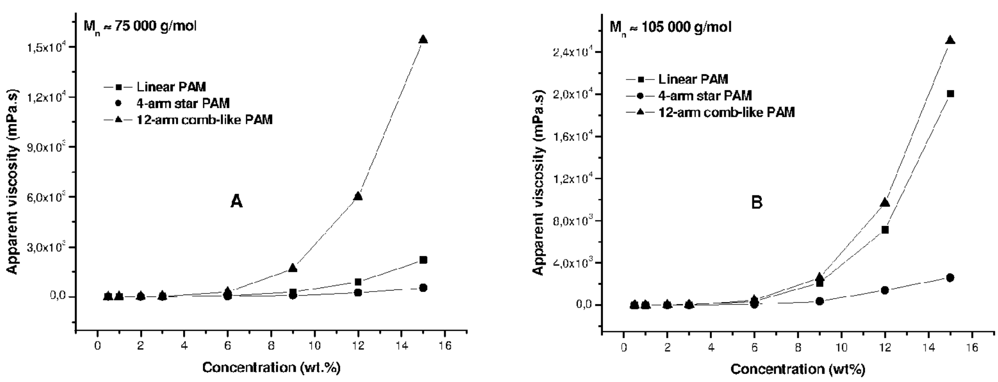
M$_n$ ≈ 75 000 g/mol
Linear PAM
4-arm star PAM
12-arm comb-like PAM
A
Apparent viscosity (mPa.s)
Concentration (wt.%)
M$_n$ ≈ 105 000 g/mol
Linear PAM
4-arm star PAM
12-arm comb-like PAM
B
Apparent viscosity (mPa.s)
Concentration (wt%)

Fig. 4.

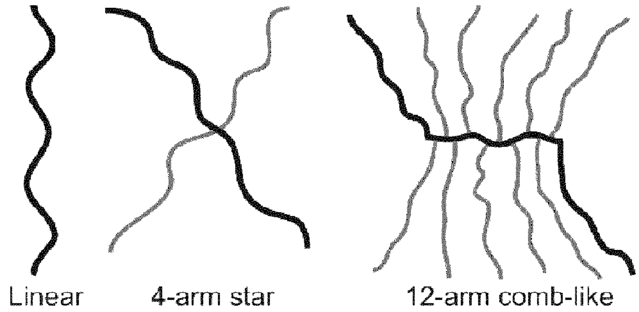


Fig. 5

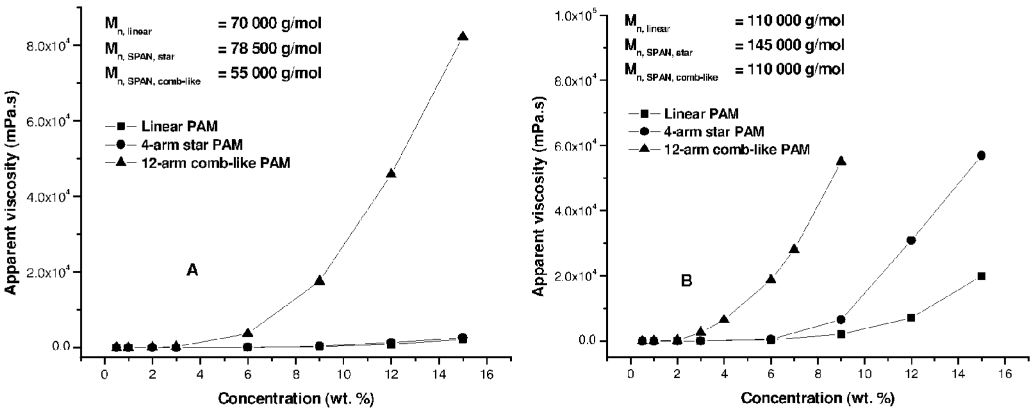


Fig. 6

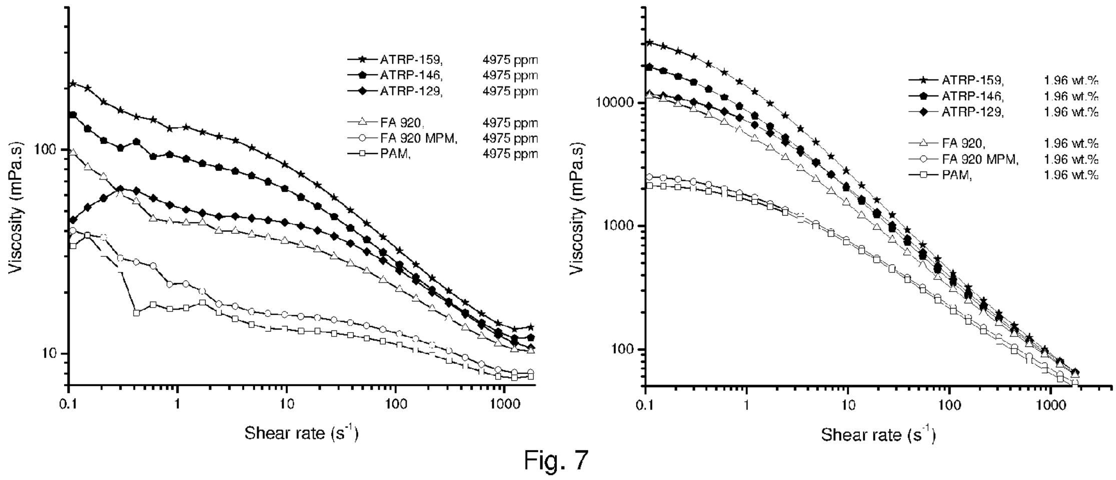


Fig. 7

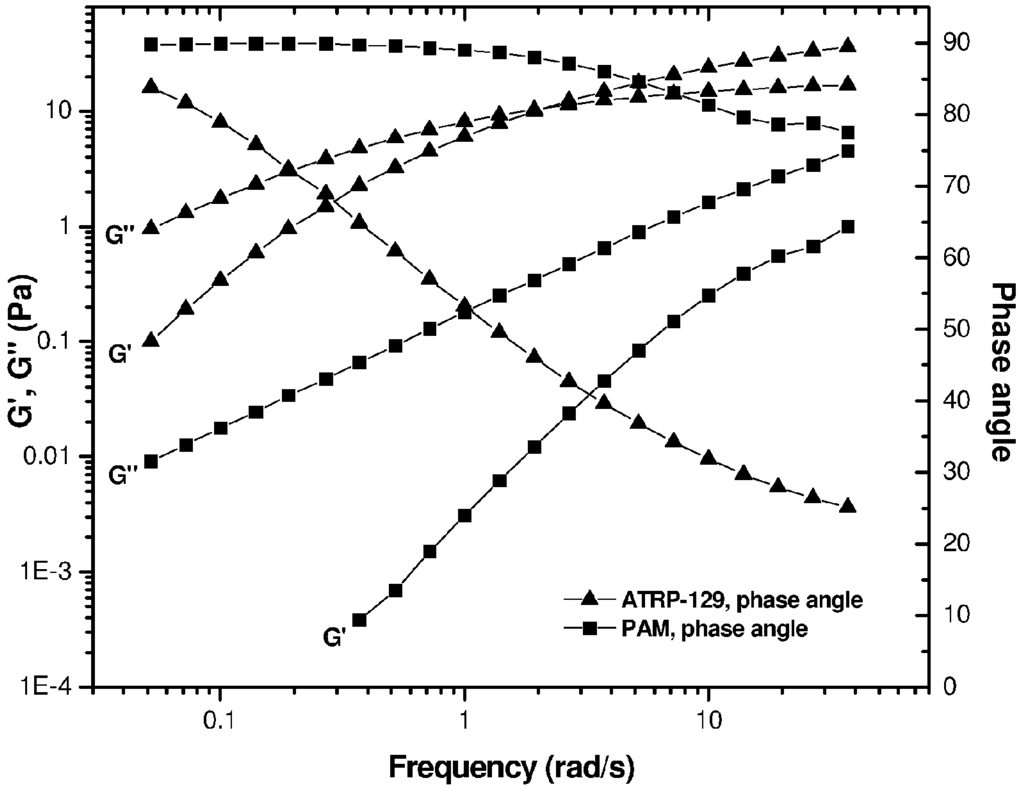
10
1
0.1
0.01
1E-3
1E-4
G'
G"
G'
G"
G'
G', G" (Pa)
0.1
1
10
Frequency (rad/s)
90
80
70
60
50
40
30
20
10
0
Phase angle
ATRP-129, phase angle
PAM, phase angle

Fig. 8

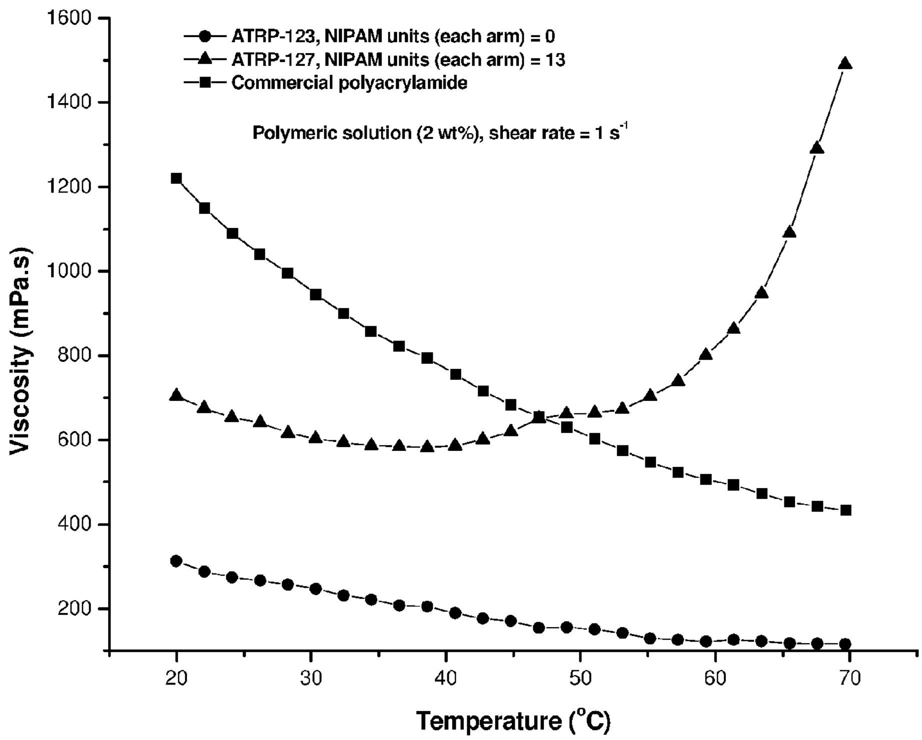
ATRP-123, NIPAM units (each arm) = 0
ATRP-127, NIPAM units (each arm) = 13
Commercial polyacrylamide
Polymeric solution (2 wt%), shear rate = 1 s-1
1600
1400
1200
1000
800
600
400
200
Viscosity (mPa.s)
20
30
40
50
60
70
Temperature (°C)

Fig. 9

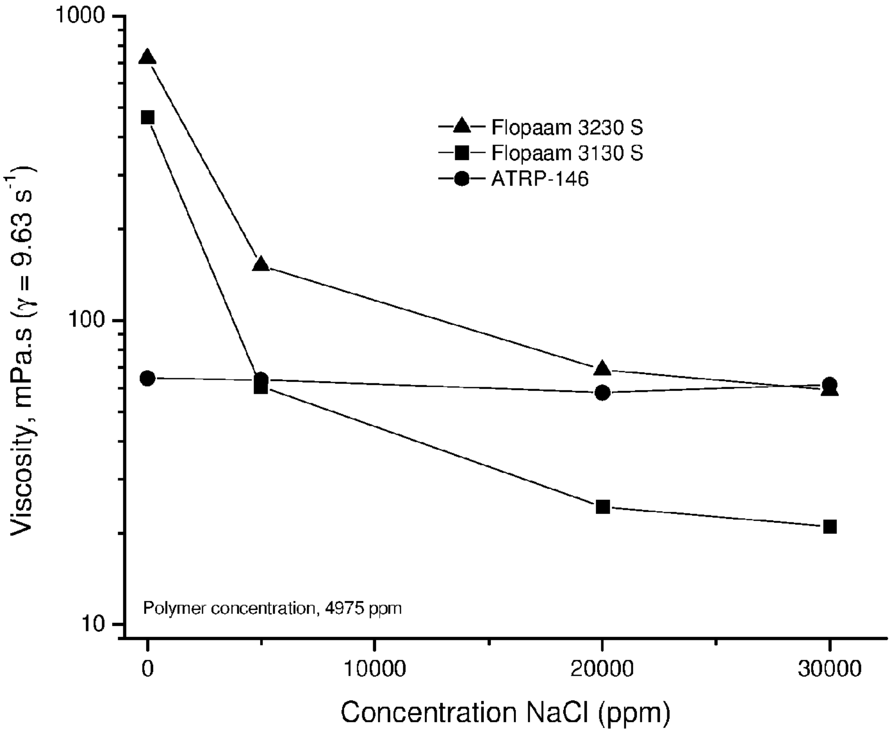
Flopaam 3230 S
Flopaam 3130 S
ATRP-146
Viscosity, mPa.s (γ = 9.63 s-1)
Polymer concentration, 4975 ppm
Concentration NaCl (ppm)

Fig. 10

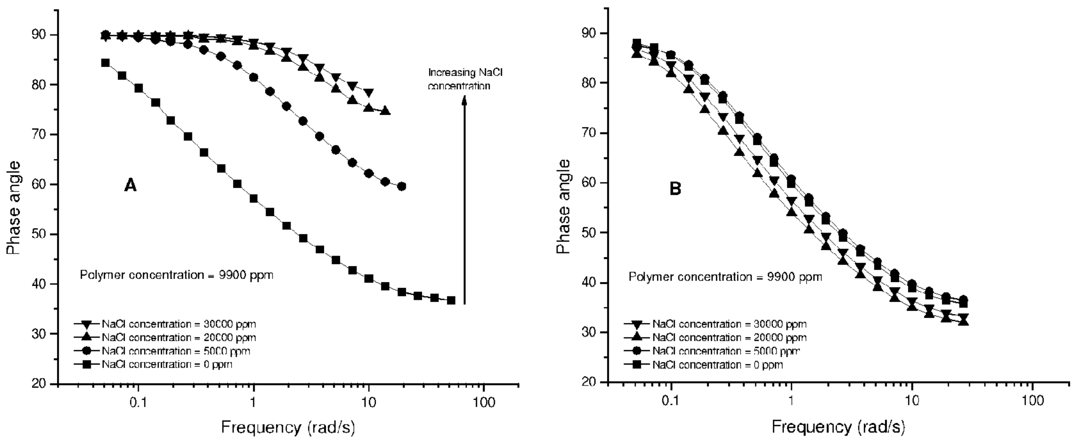
A
Increasing NaCl concentration
Polymer concentration = 9900 ppm
NaCl concentration = 30000 ppm
NaCl concentration = 20000 ppm
NaCl concentration = 5000 ppm
NaCl concentration = 0 ppm
Phase angle
Frequency (rad/s)
B
Polymer concentration = 9900 ppm
NaCl concentration = 30000 ppm
NaCl concentration = 20000 ppm
NaCl concentration = 5000 ppm
NaCl concentration = 0 ppm
Phase angle
Frequency (rad/s)

Fig. 11.

Europäisches Patentamt
European Patent Office
Office européen des brevets

# EUROPEAN SEARCH REPORT

Application Number
EP 11 19 3901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201156<br>Thomson Scientific, London, GB;<br>AN 2011-J07209<br>XP002668658,<br>& CN 102 093 505 A (PETROCHINA CO LTD)<br>15 June 2011 (2011-06-15)<br>* abstract *<br>----- | 1,3,4,9 | INV.<br>C08F220/56<br>C09K8/588<br>C08F293/00 |
| X | US 2011/269651 A1 (BISMARCK ALEXANDER [GB] ET AL) 3 November 2011 (2011-11-03)<br>* paragraphs [0039], [0081]; examples 1,2 *<br>----- | 1,9,10,<br>13,14 | |
| X,D | US 4 400 496 A (BUTLER GEORGE B [US] ET AL) 23 August 1983 (1983-08-23)<br>* column 1, lines 10-15; table 1 *<br>----- | 1,9,10,<br>12,14 | |
| X | WO 2006/067325 A1 (RHONE POULENC CHIMIE [FR]; BENDEJACQ DENIS [FR]; PITOIS CLAIRE [FR]; K) 29 June 2006 (2006-06-29)<br>* page 1, lines 1-25 *<br>* page 2, line 35 *<br>* page 7, lines 24-32 *<br>* page 14, lines 8-13,21-22 *<br>* page 15, lines 25-37 *<br>----- | 1-4,<br>6-10,<br>12-14 | TECHNICAL FIELDS SEARCHED (IPC)<br>C08F<br>C09K |
| A | DATABASE WPI<br>Week 201181<br>Thomson Scientific, London, GB;<br>AN 2011-P66943<br>XP002668659,<br>& WO 2011/147054 A1 (PETROCHINA CO LTD)<br>1 December 2011 (2011-12-01)<br>* abstract *<br>-----<br>-/-- | 1-15 | |

The present search report has been drawn up for all claims

1

| Place of search | Date of completion of the search | Examiner |
|---|---|---|
| The Hague | 2 February 2012 | Plehiers, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
&.: member of the same patent family, corresponding document

EPO FORM 1503 03.82 (P04C01)

Europäisches Patentamt
European Patent Office
Office européen des brevets

# EUROPEAN SEARCH REPORT

Application Number
EP 11 19 3901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 5 952 459 A (BROEKHUIS ANTONIUS AUGUSTINUS [NL] ET AL) 14 September 1999 (1999-09-14) * the whole document * ----- | 5,11,15 | |
| | | | TECHNICAL FIELDS SEARCHED (IPC) |

The present search report has been drawn up for all claims

1

| Place of search | Date of completion of the search | Examiner |
|---|---|---|
| The Hague | 2 February 2012 | Plehiers, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 19 3901

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2012

| Patent document cited in search report | | Publication date | Patent family member(s) | | | Publication date |
|---|---|---|---|---|---|---|
| CN 102093505 | A | 15-06-2011 | NONE | | | |
| US 2011269651 | A1 | 03-11-2011 | NONE | | | |
| US 4400496 | A | 23-08-1983 | NONE | | | |
| WO 2006067325 | A1 | 29-06-2006 | CA | 2591953 | A1 | 29-06-2006 |
| | | | CN | 101124262 | A | 13-02-2008 |
| | | | EP | 1838762 | A1 | 03-10-2007 |
| | | | US | 2010120637 | A1 | 13-05-2010 |
| | | | WO | 2006067325 | A1 | 29-06-2006 |
| WO 2011147054 | A1 | 01-12-2011 | CN | 102260489 | A | 30-11-2011 |
| | | | WO | 2011147054 | A1 | 01-12-2011 |
| US 5952459 | A | 14-09-1999 | TW | 444033 | B | 01-07-2001 |
| | | | US | 5952459 | A | 14-09-1999 |
| | | | ZA | 9802394 | A | 30-09-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4795784 A
- US 4400496 A
- US 5952459 A
- US 20070276101 A1


### Non-patent literature cited in the description


- **D. WANG et al.** *SPE-63227,* 2000, 1-10
- **D.A.Z. WEVER et al.** *Prog. Polym. Sci.,* 2011, vol. 36, 1558-1628
- Viscous-elastic polymer can increase microscale displacement efficiency in cores. **WANG, D. et al.** SPE. Society of Petroleum Engineers Inc, 2000, vol. 63227, 1-10
- **ZHANG, Y. ; BROEKHUIS, A. A. ; STUART, M. C. A. ; PICCHIONI, F.** *J Appl Polym Sci,* 2008, vol. 107, 262-271
- **LEVITT, D.B. ; POPE, G.A.** *SPE Improved Oil Recovery Symp,* 2008, 1-18
- **ZHANG, L.-J. ; YUE, X.-A.** *J Cent South Univ Tech,* 2008, vol. 15, 84-87
- **ZHANG, L.-J. ; YUE, X.-A. ; GUO, F.** *Pet Sci,* 2008, vol. 5, 56-61
- **WANG, D. ; XIA, H. ; LIU, Z. ; ANDA, Q. ; YANG, Q.** *SPE Asia Pacific Oil Gas Confr,* 2001, 1-9
- **YIN, H. ; WANG, D. ; ZHONG, H.** *SPE Ann Tech Confr,* 2006, 1-10
- **WANG, D. ; CHENG, J.; ; YANG, Q. ; GONG, W. ; LI, Q. ; CHEN, F.** *SPE Ann Tech Confr,* 2000, 1-10
- **XIA, H. ; JU, Y. ; KONG, F. ; WU, J.** *SPE Ann Tech Confr,* 2004, 1-8